# EUROPÄISCHE PATENTSCHRIFT

(11) **EP 1 241 875 B1**
(45) Veröffentlichungstag und Bekanntmachung des Hinweises auf die Patenterteilung: **07.05.2003**
(21) Anmeldenummer: 01104317.1
(22) Anmeldetag: 22.02.2001
(51) Int. Cl.: H04N 5/222, H04N 5/232

(54) **Verfahren zur Aufnahme von Videodaten**
Method for recording video data
Procédé d'enregistrement des données vidéo

(43) Veröffentlichungstag der Anmeldung: 18.09.2002
(73) Patentinhaber: TELCAST Media Group GmbH, 80805 München (DE)
(72) Erfinder: Hohenacker, Thomas, 82319 Starnberg (DE)
(74) Vertreter: Manitz, Finsterwald & Partner Gbr

(56) Entgegenhaltungen:
- AT-U- 4 048
- PATENT ABSTRACTS OF JAPAN vol. 1999, no. 10, 31. August 1999 (1999-08-31) & JP 11 136652 A (AISIN SEIKI CO LTD), 21. Mai 1999 (1999-05-21)
- GROEGER H: "DER DIGITALE NEWSROOM" FERNSEH UND KINOTECHNIK,DE,VDE VERLAG GMBH. BERLIN, Bd. 50, Nr. 11, 1. November 1996 (1996-11-01), Seiten 654-656, XP000641234 ISSN: 0015-0142
- PATENT ABSTRACTS OF JAPAN vol. 1998, no. 02, 30. Januar 1998 (1998-01-30) & JP 09 275451 A (HOKURIKU HOSO KK), 21. Oktober 1997 (1997-10-21)

## Beschreibung

Die Erfindung betrifft ein Verfahren zur Aufnahme von Videodaten an wenigstens einem, insbesondere an einer Vielzahl von Schauplätzen.

Aus der AT 004 048 U1 ist eine Türsprechanlage mit Türöffner und Sende-/Empfangsteil für ein mobiles Kommunikationssystem bekannt. Durch Drücken eines Glockenknopfs einer an der Tür installierten Türglocke wird von der Türglocke ein entferntes Mobiltelefon angerufen, wodurch eine das Mobiltelefon mit sich führende Person mit derjenigen Person sprechen kann, welche die Türglocke betätigt hat. Zusätzlich zu dieser Gegensprechanlage-Funktion kann an der Türglocke auch eine Kamera installiert werden, mit der die das Mobiltelefon mit sich führende Person den Besucher, der die Türglocke betätigt hat, sehen kann.

Der Patent Abstracts of Japan, vol. 1999, no. 10, 31. August 1999 (1999-08-31) & JP-A-11 136652, 21. Mai 1999 (1999-05-21) betrifft die Fernsteuerung einer Fernsehkamera mittels eines Telefons, wobei die Fernsteuerung über eine ISDN-Verbindung erfolgt.

Der Patent Abstracts of Japan, vol. 1998, no. 02, 30. Januar 1998 (1998-01-30) & JP-A-09 275451, 21. Oktober 1997 (1997-10-21) ist ebenfalls auf die Fernsteuerung einer Kamera mittels eines Telefons gerichtet, wobei sich die Kamera an einem unbeaufsichtigtem Ort befindet, der von dem Ort entfernt gelegen ist, von dem aus die Kamera gesteuert wird.

Insbesondere im Bereich des Fernsehens und des Internet besteht ein Bedarf an Unterhaltung mit individuellen und spontanen Elementen und an Möglichkeiten, beliebige Personen auf einfache Weise zum Mitwirken bei den verschiedensten Aktionen zu gewinnen. Besonders erfolgversprechend sind dabei Aktionen, in denen "die Frau oder der Mann von der Straße" mitwirken kann und der Zuschauer somit von seinesgleichen, d.h. von Menschen unterhalten wird, mit denen er sich identifizieren kann.

Es ist eine Aufgabe der Erfindung, eine auf einfache Weise realisierbare Möglichkeit zur Aufnahme von Videodaten unter Mitwirkung von prinzipiell beliebigen Personen zu schaffen.

Die Lösung dieser Aufgabe erfolgt durch die Merkmale des unabhängigen Verfahrensanspruchs 1.

Mit der Erfindung kann prinzipiell jeder beliebige Ort auf der Welt zu einer Bühne für "die Frau oder den Mann auf der Straße" gemacht werden. Vorzugsweise wird als Schauplatz ein öffentlich zugänglicher Ort gewählt, z.B. ein Platz oder eine Straße. Alternativ kann sich erfindungsgemäß der Schauplatz auch an einem nicht-öffentlichen Ort und z.B. in einem Gebäude befinden. Für den Zugang zum Schauplatz kann beispielsweise Eintritt verlangt werden.

Erfindungsgemäß kann der Benutzer selbst den Zeitpunkt bestimmen, zu dem die Videodaten aufgenommen werden, indem der Benutzer an einem vorgegebenen Schauplatz z.B. mit seinem Mobiltelefon eine Kommunikationsverbindung zu einem dem Schauplatz zugeordneten Kamerasystem aufbaut. Erfindungsgemäß initiiert der Mitwirkende somit selbst auf freiwilliger Basis per Telefon die Aufnahme persönlicher Videodaten.

Mit dem Telefon nutzt die Erfindung in vorteilhafter Weise eine am Schauplatz und im Fall eines Mobiltelefons beim Benutzer bereits vorhandene Infrastruktur.

Bei den Videodaten kann es sich zum einen um Darbietungen oder Showeinlagen des Benutzers handeln, z.B. um das Singen eines Liedes, um pantomimische Darstellungen oder um gesprochene oder gesungene Grüße an Freunde und Bekannte. Des weiteren kann der Benutzer zur Beantwortung von Quizfragen aufgefordert werden. Ferner kann der Benutzer die Erfindung nutzen, sich einem breiten Publikum vorzustellen, womit z.B. Single-Shows realisiert werden können. Zum anderen kann die Erfindung zur Durchführung von Umfragen genutzt werden. Ferner können mittels der Erfindung Bewerbungsaktionen durchgeführt werden. Die Erfindung kann insbesondere zu Casting-Zwecken eingesetzt werden.

Erfindungsgemäß kann der Lautsprecher des Telefons zur direkten Kommunikation mit dem Benutzer genutzt werden, was insbesondere dann von Vorteil ist, wenn z.B. bei Quizspielen die Kommunikation unter Ausschluß umstehender Personen erfolgen soll, die z.B. gestellte Quizfragen nicht hören sollen.

In einer besonders bevorzugten Ausführung der Erfindung wird zum Aufbau der Kommunikationsverbindung das Kamerasystem mittels des Telefons über eine schauplatzspezifische Telefonnummer angerufen. Der sich am Schauplatz befindende Benutzer wählt z.B. mit seinem Mobiltelefon die schauplatzspezifische Telefonnummer, um die Kommunikationsverbindung aufzubauen. Die Telefonnummer ist grundsätzlich beliebig und kann z.B. eine normale Mobilfunknetznummer oder eine gebührenpflichtige Nummer sein.

Des weiteren ist bevorzugt vorgesehen, daß auf einer am Schauplatz installierten Anzeigeeinrichtung wenigstens eine schauplatzspezifische Telefonnummer angezeigt wird.

Auf diese Weise kann aus einer normalen Werbefläche eine interaktive Anzeigeeinrichtung werden, deren Aufstellort von jedermann einfach durch Anrufen der angezeigten Telefonnummer zu einem Aufnahmestudio gemacht werden kann.

Erfindungsgemäß kann dem Schauplatz entweder genau eine Telefonnummer zugeordnet sein, oder es können auch mehrere schauplatzspezifische Telefonnummern vorgesehen sein, die einem Benutzer z.B. eine Auswahl aus unterschiedlichen Rubriken wie beispielsweise "Single-Show", "Quizspiel", "Casting" und "Umfrage" ermöglichen.

Zusätzlich zu der oder den Telefonnummern können Anweisungen angezeigt werden, die dem am Schauplatz befindlichen Betrachter erklären, welchem Zweck die Telefonnummern dienen. Diese Informationen können beispielsweise in einem Werbeumfeld angezeigt werden.

Bei der Anzeigeeinrichtung kann es sich z.B. um ein Plakat, ein Poster oder einen Monitor handeln.

Vorzugsweise wird die Anzeigeeinrichtung während der Aufnahme als Hintergrund verwendet. Der Benutzer steht z.B. während der Aufnahme vor einer als Aufnahmehintergrund ausgebildeten Anzeigeeinrichtung wie z.B. einer Plakatwand, wie sie üblicherweise zu Werbezwecken verwendet wird. Durch entsprechende Gestaltung der Anzeigeeinrichtung und Wahl der Aufnahmebedingungen können mit der Erfindung auf einem Platz oder einer Straße beispielsweise bekannte Fernsehstudios nachgebildet werden.

Ferner wird erfindungsgemäß vorgeschlagen, daß eine laufende Aufnahme am Schauplatz optisch und/oder akustisch angezeigt wird. Bevorzugt erfolgt eine derartige "on air"- oder "Auf Sendung"-Anzeige an einer die schauplatzspezifische(n) Telefonnummer(n) aufweisenden und als Aufnahmehintergrund dienenden Anzeigeeinrichtung. So erfüllt z.B. eine Plakatwand eine wirkungsvolle Zusatzfunktion. Die "on air"-Anzeige kann z.B. durch ein rotes Licht und/oder durch einen während der Aufnahme aufleuchtenden Schriftzug "on air" oder "Auf Sendung" erfolgen, wodurch am Schauplatz echte Studioatmosphäre entsteht. Die am Schauplatz installierte Anzeigeeinheit schafft einen besonderen Reiz für den Benutzer, da er nicht nur durch telefonisches Initiieren einer Aufnahme persönlich den Schauplatz in sein eigenes Studio verwandeln, sondern mit Hilfe der zusätzlichen optischen und/oder akustischen Anzeige die Aufmerksamkeit von am Schauplatz befindlichen Personen auf die Aufnahmeaktion und damit auf seine Person lenken kann. Die Anzeigeeinheit muß nicht in eine z.B. die Telefonnummer anzeigende und als Aufnahmehintergrund dienende Plakatwand integriert sein und kann grundsätzlich an jeder beliebigen Stelle am Schauplatz angeordnet werden.

Des weiteren wird erfindungsgemäß vorgeschlagen, daß über das Telefon Audiodaten aufgenommen und insbesondere abgespeichert werden. Ohne zusätzlichen aufnahmetechnischen Aufwand kann so unter Ausnutzung der am Schauplatz bzw. beim Benutzer vorhandenen Infrastruktur der Ton, insbesondere die Sprache des Benutzers zu den Videodaten aufgenommen und ggfls. für eine spätere Verwendung abgespeichert werden.

Alternativ oder zusätzlich können Audiodaten über ein am Schauplatz installiertes Tonaufnahmesystem aufgenommen werden. Hierdurch kann Umgebungston aufgenommen und so die Atmosphäre des Schauplatzes eingefangen werden.

Des weiteren ist bevorzugt vorgesehen, daß das Kamerasystem automatisch und insbesondere entsprechend einer zumindest im wesentlichen vorgebbaren, bevorzugt über das Telefon beeinflußbaren Aufnahmeprozedur arbeitet.

Bevorzugt ist es, wenn das Kamerasystem über eine Aufnahmeeinheit und/oder über das Telefon aktiviert, deaktiviert und/oder gesteuert wird.

Vorzugsweise wird das Kamerasystem mittels des Telefons sowohl eingeschaltet als auch nach Abschluß der Aufnahme wieder ausgeschaltet. Jedermann kann so gewissermaßen zu seinem eigenen Aufnahmeleiter wersen. Im Fall eines permanent laufenden Kamerasystems wird mittels des Telefons ein zusätzlicher Vorgang gestartet und beendet, der insbesondere eine außerhalb der vom Benutzer gestarteten und beendeten Zeiträume nicht erfolgende Übertragung und/oder Speicherung der vom Kamerasystem gelieferten Daten beinhaltet.

Das Aktivieren und Deaktivieren des Kamerasystems oder der zusätzlichen Vorgänge erfolgt entweder direkt zwischen Telefon und Kamerasystem oder über eine Zwischenstation z.B. in Form einer am Schauplatz befindlichen Aufnahmeeinheit oder einer vom Schauplatz räumlich getrennten Aufnahmezentrale.

Bevorzugt ist eine Aufnahmeeinheit vorgesehen, die zur Kommunikation mit dem Telefon und mit dem Kamerasystem sowie insbesondere zur Steuerung des Kamerasystems ausgebildet ist. Hierdurch kann die Kommunikation zwischen dem Telefon und dem Kamerasystem über die Aufnahmeeinheit aufgebaut werden.

Die Aufnahmeeinheit ist bevorzugt am Schauplatz installiert und insbesondere in räumlicher Nähe zum Kamerasystem angeordnet, vorzugsweise in das Kamerasystem integriert.

Zur Kommunikation mit dem Benutzer kann die Aufnahmeeinheit eine Kommunikationseinheit insbesondere in Form eines Sprachcomputers umfassen. Mit der Kommunikationseinheit können über das Telefon Sprachmitteilungen, insbesondere Informationen, Belehrungen, Erklärungen und/oder Regieanweisungen, an den Benutzer übermittelt werden. Vorzugsweise erfolgt die Kommunikation mit dem Benutzer menügesteuert, wobei der Benutzer beispielsweise mit Hilfe der Tastatur seines Mobiltelefons durch ein Menü geführt werden kann.

Mittels der Sprachmitteilungen kann der Benutzer gezielt dirigiert und beispielsweise aufgefordert werden, sich einer Kamera zuzuwenden, die bevorzugt versteckt oder getarnt am Schauplatz installiert ist, um vor Vandalismus geschützt zu sein. Des weiteren können dem Benutzer Spielregeln erklärt werden, der Benutzer kann über ggfls. bestehende rechtliche Bestimmungen informiert werden, und es können dem Benutzer Anfang und Ende der eigentlichen Aufnahme mitgeteilt werden.

Alternativ oder zusätzlich zu einer Kommunikationseinheit können Sprachmitteilungen zumindest teilweise von einer als Aufnahmeleiter, Moderator oder Regisseur fungierenden Person an den Benutzer übermittelt werden, die sich z.B. in einer Aufnahmezentrale aufhält, zu welcher der Benutzer zuvor eine Kommunikationsverbindung aufgebaut hat.

Gemäß einer weiteren bevorzugten Ausführungsform der Erfindung werden über das Telefon an eine Aufnahmeeinheit insbesondere benutzerspezifische und/oder die jeweilige Aufnahme betreffende Benutzerdaten übermittelt und insbesondere gespeichert. Dabei dient vorzugsweise die Tastatur des Telefons zur Dateneingabe.

Hierdurch sorgt in vorteilhafter Weise der Benutzer selbst dafür, daß z.B. für die jeweilige Aufnahme oder für eine spätere Auswertung benötigte Benutzerdaten gesammelt werden. Die Mitwirkenden selbst können so auf freiwilliger Basis eine zentrale Datenbank mit ihren persönlichen Daten füllen. Bei den Benutzerdaten handelt es sich beispielsweise um benutzerspezifische Informationen wie z.B. Geschlecht und Alter oder um Daten, welche die jeweilige Aufnahme betreffen. So kann der Benutzer z.B. im Rahmen eines Quizspiels oder einer Umfrage zwischen verschiedenen Antworten zu einer Frage wählen, indem er jeweils eine entsprechende Taste auf dem Telefon drückt.

Des weiteren ist erfindungsgemäß vorzugsweise vorgesehen, daß mittels gespeicherter Benutzerdaten und/oder vorgebbarer Kriterien zwischen zumindest vorübergehend gesperrten Benutzern einerseits und zuzulassenden Benutzern andererseits unterschieden wird.

Bei den gespeicherten Benutzerdaten kann es sich nicht nur um die vorstehend aufgeführten Daten, sondern z.B. auch um die Telefonnummer des vom anrufenden Benutzer verwendeten Telefons handeln. Dies eröffnet z.B. die Möglichkeit, bestimmte Mobiltelefone gezielt zu sperren und damit deren Besitzer von einer Teilnahme auszuschließen. Dadurch kann das Aufnahmesystem vor Störern geschützt werden. Neben diesem Schutz vor Vandalismus können außerdem solche anrufenden Benutzer identifiziert werden, die bestimmte vorgebbare Auswahlkriterien erfüllen. Wenn z.B. die Telefonnummern der Anrufer zusammen mit der jeweiligen Uhrzeit gespeichert werden, dann kann beispielsweise mit Hilfe dieser Daten dafür gesorgt werden, daß jeder Benutzer innerhalb eines vorgebbaren Zeitraumes von beispielsweise einem Tag oder einer Woche nur einmal zugelassen wird. Auch hierdurch wird die Funktionalität des Systems gewährleistet. Ferner können die gespeicherten Benutzerdaten auch für Gewinnspiele genutzt werden, indem z.B. die Anrufe der Benutzer gezählt werden und das Erreichen einer bestimmten Anzahl von Anrufen belohnt wird.

Folglich kann durch die Speicherung von Benutzerdaten gleichzeitig die Systemsicherheit erhöht, die Funktionalität des Systems sichergestellt und eine Vielzahl zusätzlicher Nutzungsvarianten geschaffen werden.

Die Aufnahmeeinheit kann zur Kommunikation mit dem Kamerasystem eine insbesondere computergestützte Steuereinheit umfassen. Alternativ oder zusätzlich kann vorgesehen sein, daß das Kamerasystem z.B. von einer vom Schauplatz räumlich getrennten Aufnahmezentrale aus ferngesteuert wird. Dies kann ebenfalls automatisch mittels einer Steuereinheit oder manuell durch eine sich in der Aufnahmezentrale aufhaltende Person erfolgen.

Gemäß einer weiteren bevorzugten Ausführungsform der Erfindung ist eine Speichereinrichtung z.B. in Form einer Computerfestplatte zur Speicherung von zumindest die Videodaten umfassenden Aufnahmedaten vorgesehen. Die Speichereinrichtung ist vorzugsweise am Schauplatz installiert und insbesondere in das Kamerasystem oder in eine Aufnahmeeinheit integriert. Die Aufnahmedaten werden dabei insbesondere in einer Datenbank abgelegt. Prinzipiell können Videodaten auch auf Magnetbändern wie z.B. herkömmlichen Videokassetten aufgezeichnet werden.

In einer weiteren Variante der Erfindung wird vorgeschlagen, daß die Aufnahmeeinheit als Internet-Server ausgebildet ist. Aufnahmedaten, die zumindest die aufgenommenen Videodaten umfassen, können so am Schauplatz abgelegt und über das Internet abgerufen werden.

Gemäß einem weiteren bevorzugten Ausführungsbeispiel der Erfindung können im Anschluß an den Aufbau der Kommunikationsverbindung am Schauplatz installierte aufnahmetechnische Einrichtungen aktiviert, deaktiviert und/oder gesteuert werden, insbesondere über eine Aufnahmeeinheit und/oder über das Telefon. Bei den aufnahmetechnischen Einrichtungen handelt es sich beispielsweise um Beleuchtungs- und/oder Tonaufnahmetechnik.

Dieser benutzerinitiierte Betrieb der Aufnahmetechnik ist insbesondere dann von Vorteil, wenn als Schauplatz ein Gebäude, z.B. eine Gaststätte, eine Diskothek, ein Kino oder eine Veranstaltungshalle, gewählt wird. Es kann sich bei dem Schauplatz um einen als Bühne ausgebildeten Gebäudeteil handeln.

Insbesondere dann, wenn der Schauplatz ein Gebäude oder Gebäudeteil ist, kann zur Kommunikation ein am Schauplatz installiertes Telefon vorgesehen sein. Auf Mobiltelefone der Benutzer kann dann verzichtet werden.

Ferner wird erfindungsgemäß vorgeschlagen, daß zumindest die Videodaten umfassende, insbesondere am Schauplatz gespeicherte Aufnahmedaten über ein Kommunikationsnetz oder Datennetz an einen vom Schauplatz räumlich getrennten Ort übermittelt werden können. Hierzu ist z.B. eine Aufnahmeeinheit des Kamerasystems einfach mit einem lokalen Telefonnetz z.B. über einen ISDN-, ADSL-, HDSL-, TDSL- oder Analoganschluß verbunden.

Prinzipiell ist es erfindungsgemäß auch möglich, die Aufnahmedaten über ein drahtloses Kommunikationsnetz, insbesondere über ein Mobilfunknetz, von einer am Schauplatz befindlichen Sendeeinheit zu einer vom Schauplatz räumlich getrennten und z.B. in einer Aufnahmezentrale befindlichen Empfangseinheit zu übertragen.

Die Aufnahmedaten können in einer Variante der Erfindung an einen Internet-Server übermittelt werden, um auf diese Weise die Aufnahmedaten im Internet bereitzustellen.

Es ist auch möglich, daß die Aufnahmedaten an eine vom Schauplatz räumlich getrennte Aufnahmezentrale übermittelt werden. Hier können z.B. die Videodaten einer Nachbearbeitung unterzogen und insbesondere mit aufgenommenen Audiodaten zusammengefaßt, bevorzugt synchronisiert werden.

Für die Übertragung kommt grundsätzlich jedes geeignete Datenübertragungsverfahren in Frage.

In einer weiteren Variante der Erfindung ist vorgesehen, daß zumindest die Videodaten umfassende Aufnahmedaten im Fernsehen gesendet werden.

Dabei können die Aufnahmen jeweils ein Programmstück bilden, das z.B. eine Showeinlage oder eine Darbietung unter Mitwirkung des anrufenden Benutzers beinhaltet. Aus mehreren aufgenommenen Programmstücken kann ein Fernsehprogramm zusammengestellt werden. Die Erfindung ermöglicht es hierbei, während einer Aufnahmeperiode, z.B. während eines Tages, an einem oder mehreren Schauplätzen aufgenommene Programmstücke zu sammeln und aus den gesammelten Programmstücken nach bestimmten Auswahlkriterien ein Fernsehprogramm zusammenzustellen, das beispielsweise täglich am Abend gesendet wird.

Dieses Fernsehprogramm kann bei minimalen Herstellungskosten eine große Vielfalt aufweisen und in einer einzigen Sendung z.B. einen singenden Chinesen, eine Quizfragen beantwortende Südafrikanerin, einen sich als Single empfehlenden Schweden und eine in den USA lebende und ihre Eltern in Deutschland grüßende Austauschstudentin zeigen, und zwar jeweils an Originalschauplätzen und ohne den Einsatz von personal- und kostenintensiven Aufnahmeteams. Die aufgenommenen Programmstücke können einer Nachbearbeitung unterzogen werden. Insbesondere können die Programmstücke zurechtgeschnitten, mit einem Kommentar versehen und/oder mit Musik unterlegt werden.

Alternativ oder zusätzlich ist es erfindungsgemäß auch möglich, die Aufnahmedaten im Internet bereitzustellen. Im Rahmen von z.B. Quizspielen, Single-Shows oder anderen Unterhaltungsaktionen erstellte Aufnahmen können so von jedermann abgerufen werden, und zwar entweder kostenfrei oder kostenpflichtig. Die Aufnahmen können aber auch für rein nicht-öffentliche Zwecke verwendet werden, z.B. im Rahmen von Bewerbungs-, Casting- oder Umfrage-Aktionen, wobei dafür gesorgt werden kann, daß lediglich autorisierte Personen Zugriff auf die abgelegten Aufnahmedaten erhalten.

Ferner kann das Kamerasystem nach Art einer sogenannten Webcam eingesetzt werden, indem mittels des Kamerasystems eine Live-Aufnahme des Schauplatzes zeitweise oder zumindest im wesentlichen ununterbrochen im Internet bereitgestellt wird. Mittels des Telefons kann der Benutzer dafür sorgen, daß hinsichtlich Anfangs- und Endzeitpunkt von ihm definierbare Aufnahmeabschnitte, in denen er selbst aufgenommen wird, abgespeichert werden. Der Benutzer kann sich so selbst z.B. im Internet verewigen, da die gespeicherten Aufnahmeabschnitte im Gegensatz zu der Live-Übertragung nicht verloren gehen.

Gemäß einem besonders bevorzugten Ausführungsbeispiel der Erfindung ist vorgesehen, daß Videodaten an einer Vielzahl von räumlich getrennten Schauplätzen aufgenommen werden.

Erfindungsgemäß kann prinzipiell ein weltumspannendes Netz von Schauplätzen und Kamerasystemen eingesetzt werden, wobei für die Kamerasysteme jeweils am Schauplatz lediglich eine Stromversorgung und eine Anschlußmöglichkeit an ein Kommunikationsnetz oder Datennetz, für das eine normale Telefonleitung ausreicht, vorhanden sein muß. Hierdurch können spontane und individuelle Darbietungen oder sonstige Aufnahmen mit Mitwirkenden aus aller Welt gesammelt werden.

Durch die Verwendung mehrerer räumlich getrennter Kamerasysteme eröffnen sich vielfältige weitere Anwendungsmöglichkeiten. So können mit der Erfindung z.B. Ralleyspiele durchgeführt werden, in denen die Teilnehmer entsprechend einem vorgegebenen Ablaufplan mehrere Schauplätze nacheinander anlaufen und dort z.B. bestimmte Aufgaben erfüllen müssen. Beispielsweise über das Fernsehen und/oder das Internet kann die Ralley live oder z.B. im Rahmen nachträglich hergestellter Reportagen von jedermann verfolgt werden.

Die Verteilung der Schauplätze ist vorzugsweise auf eine Stadt, eine Region oder ein Land begrenzt. Erfindungsgemäß ist vorgesehen, daß jeweils außerhalb eines begrenzten, den jeweiligen Schauplatz, jedoch keine weiteren Schauplätze enthaltenden Bereiches der Aufbau der Kommunikationsverbindung verhindert wird. Hierdurch ist eine schauplatzspezifische Aufnahme gewährleistet und sichergestellt, daß Störungen durch solche Personen, die von außerhalb des jeweiligen Bereiches unter einer allein dem jeweiligen Schauplatz zugeordneten Telefonnummer anrufen, verhindert werden. Bei dem begrenzten Bereich handelt es sich insbesondere um eine den Schauplatz abdeckende Mobilfunkzelle.

Die Durchführung des erfindungsgemäßen Verfahrens erfolgt insbesondere durch ein System zur Aufnahme von Videodaten an wenigstens einem Schauplatz mit zumindest einem am Schauplatz installierten Kamerasystem, zu dem mit einem am Schauplatz befindlichen Telefon, insbesondere einem Mobiltelefon eines Benutzers, eine vorzugsweise schauplatzspezifische Kommunikationsverbindung aufbaubar ist und das bei bestehender Kommunikationsverbindung zur Aufnahme von Videodaten mit dem Benutzer als Mitwirkendem betreibbar ist.

Von einem Betreiber des Systems braucht somit lediglich für jeden Schauplatz ein Kamerasystem bereitgestellt zu werden. Die weitere Infrastruktur ist bereits vorhanden, wenn die Mobiltelefone der Benutzer und die jeweiligen Mobilfunknetze genutzt werden oder ein am Schauplatz vorhandenes Telefon verwendet wird. Anderenfalls ist lediglich ein Telefon am Schauplatz bereitszustellen.

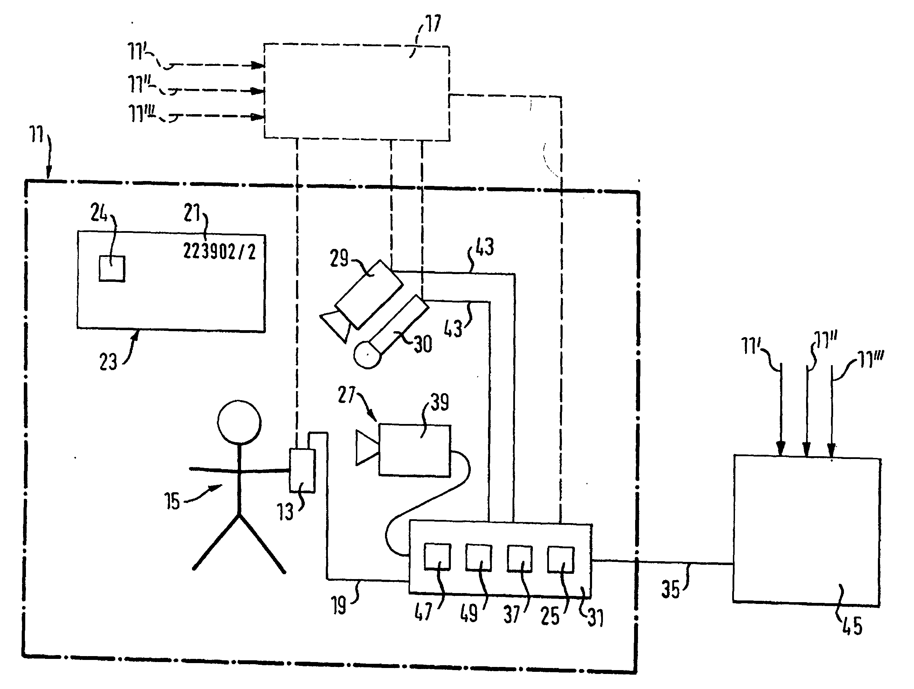

Weitere bevorzugte Ausführungsformen sowohl des erfindungsgemäßen Aufnahmeverfahrens als auch des Aufnahmesystems sind auch in den Unteransprüchen, der Beschreibung sowie der Zeichnung angegeben.

Die Erfindung wird im folgenden beispielhaft unter Bezugnahme auf die Zeichnung beschrieben, deren einzige Figur eine schematische Darstellung einer Ausführungsform eines Aufnahmesystems zeigt, das zur Durchführung des erfindungsgemäßen Aufnahmeverfahrens geeignet ist.

In der dargestellten Variante der Erfindung finden die Aufnahmen an einer Vielzahl von einzelnen Schauplätzen 11 statt, von denen einer in der Figur durch eine strichpunktierte Linie dargestellt ist. Weitere Schauplätze 11', 11", 11"' usw. sind in der Figur durch auf einen Internet-Server 45 und auf eine Aufnahmezentrale 17, die an anderer Stelle näher beschrieben werden, gerichtete Pfeile angedeutet.

Bei dem Schauplatz 11 handelt es sich um einen öffentlich zugänglichen Ort, beispielsweise um einen Platz oder einen Bereich einer Straße in einer Stadt. Grundsätzlich kommen auch nicht-öffentliche und z.B. eintrittspflichtige Schauplätze in Frage. Der Schauplatz 11 kann sich auch im Inneren eines Gebäudes befinden. Als Schauplatz 11 kann dabei z.B. ein als Bühne ausgebildeter Gebäudeteil dienen.

Am Schauplatz 11 ist eine Anzeigeeinrichtung 23 installiert, z.B. in Form einer üblicherweise zu Werbezwecken genutzten Plakatwand. Auf der Anzeigeeinrichtung 23 wird eine Telefonnummer 21 z.B. eines Mobilfunknetzes angezeigt, die ausschließlich dem jeweiligen Schauplatz 11 zugeordnet ist. In die Anzeigeeinrichtung 23 ist ferner eine Anzeigeeinheit 24 z.B. in Form einer roten Lampe oder eines Leuchtschriftzugs "on air" oder "Auf Sendung" integriert, die über eine im folgenden näher beschriebene Aufnahmeeinheit 31 ansteuerbar ist, um eine laufende Aufnahme optisch anzuzeigen.

Das Aufnahmesystem umfaßt des weiteren ein am Schauplatz 11 installiertes Kamerasystem 27, das eine Kamera 39 und eine mit der Kamera 39 verbundene, in räumlicher Nähe zur Kamera 39 angeordnete, computergesteuerte Aufnahmeeinheit 31 aufweist. Die Aufnahmeeinheit 31 umfaßt eine rechnergestützte Steuereinheit 47 für die Kamera 39, eine Auswerteeinheit 49 zur Verarbeitung u.a. von Benutzerdaten, eine Speichereinrichtung 37 z.B. in Form einer Computerfestplatte zur Speicherung insbesondere von Aufnahmedaten und Benutzerdaten sowie eine Kommunikationseinheit 25 in Form eines Sprachcomputers zur Kommunikation mit einem Benutzer 15.

Das Kamerasystem 27 ist derart positioniert, daß einerseits die Kamera 39 den gesamten Schauplatz 11 oder zumindest einen Teil davon einsehen kann und andererseits das Kamerasystem 27 vor Vandalismus möglichst gut geschützt ist. Hierzu kann sich das Kamerasystem 27 beispielsweise in einer Wohnung befinden, von der aus eine gute Sicht auf den Schauplatz 11 besteht. Das Kamerasystem 27, insbesondere die Kamera 39 wird vorzugsweise derart versteckt oder getarnt positioniert, daß uneingeweihte Personen den Standort der Kamera 39 nicht ausmachen können.

Zur Durchführung des erfindungsgemäßen Aufnahmeverfahrens nutzt das Aufnahmesystem außerdem Mobiltelefone 13 von am Schauplatz 11 befindlichen Benutzern 15 sowie die jeweiligen Mobilfunknetze. Prinzipiell kann auch ein am Schauplatz 11 installiertes Telefon verwendet werden. Auf Mobiltelefone 13 kann dann verzichtet werden.

Jede Person 15 mit einem Mobiltelefon 13, die sich am Schauplatz 11 befindet, kann sich mittels des Kamerasystems 27 aufnehmen lassen. Hierzu wählt der Benutzer 15 mit seinem Mobiltelefon 13 die auf der Anzeigeeinrichtung 23 angezeigte, schauplatzspezifische Telefonnummer 21.

In einer bevorzugten Variante der Erfindung wird hierdurch eine Kommunikationsverbindung 19 zwischen dem Mobiltelefon 13 und der lokalen Aufnahmeeinheit 31 aufgebaut.

Gemäß einer Alternative, die in der Figur durch gestrichelte Linien angedeutet ist, kann die Kommunikation zwischen einem Telefon 13 und dem Kamerasystem 27 auch über eine Aufnahmezentrale 17 erfolgen, die sich an einem beliebigen Ort auf der Welt befinden und mit dem Kamerasystern 27 über ein grundsätzlich beliebiges Kommunikations- oder Datennetz, z.B. ein normales Telefonnetz, kommunizieren kann. Die Funktionen der Aufnahmeeinheit 31 können ganz oder teilweise auch von der Aufnahmezentrale 17 ausgeführt werden, so daß insoweit auf die Aufnahmezentrale 17 im folgenden nicht näher eingegangen wird.

Das Aufnahmesystem umfaßt des weiteren einen Internet-Server 45, an den aufgenommene Daten, insbesondere über die Kamera 39 in die Aufnahmeeinheit 31 eingespeiste Videodaten, übermittelt werden können. Die Kommunikation zwischen der Aufnahmeeinheit 31 und dem vom Schauplatz 11 räumlich getrennten Internet-Server 45 erfolgt über ein normales Telefonnetz 35. Hierzu ist die Aufnahmeeinheit 31 z.B. über einen lokalen ISDN-Anschluß am Schauplatz 11 mit dem Telefonnetz 35 verbunden. Es können prinzipiell auch andere und grundsätzlich auch drahtlose Kommunikationsnetze zur Datenübertragung verwendet werden. Der Internet-Server 45 kann sich an einem beliebigen Ort auf der Welt befinden.

Unabhängig davon, ob eine ggfls. vorhandene Aufnahmezentrale 17 zur Steuerung der Vorgänge am Schauplatz 11 eingesetzt wird oder nicht, können aufgenommene Daten alternativ oder zusätzlich auch vom Schauplatz 11 an die Aufnahmezentrale 17 übermittelt werden, wo die Daten z.B. für eine Fernsehsendung aufbereitet, nachbearbeitet und in geeigneter Weise zu einem Programm zusammengestellt oder auf andere Art und Weise und zu anderen Zwecken ausgewertet werden können.

Es ist erfindungsgemäß auch möglich, daß die Aufnahmeeinheit 31 selbst als Internet-Server ausgebildet ist. Aufgenommene und gespeicherte Daten können dann direkt an der Aufnahmeeinheit 31 abgerufen werden.

Das Aufnahmesystem umfaßt ferner aufnahmetechnische Einrichtungen, und zwar Beleuchtungseinrichtungen 29 sowie ein Tonaufnahmesystem 30. Diese Aufnahmetechnik 29, 30, die insbesondere bei in einem Gebäude befindlichem Schauplatz 11 eingesetzt wird, kann über die Aufnahmeeinheit 31 aktiviert, deaktiviert und gesteuert werden, und zwar über entsprechende Kommunikationsnetze 43, die beispielsweise als einfache Steuerleitungen ausgebildet sind.

Sowohl mit dem Tonaufnahmesystem 30 als auch über die Mikrofone der Mobiltelefone 13 aufgenommene Audiodaten können zusammen mit von der Kamera 39 gelieferten Videodaten in entsprechenden Datenbanken der Speichereinrichtung 37 abgelegt werden. Darüber hinaus können in der Aufnahmeeinheit 31 vorgegebene Auswahlkriterien sowie Benutzerdaten gespeichert werden. Letztere umfassen insbesondere Telefonnummern von Telefonen 13 anrufender Benutzer 15 sowie von den Benutzern 15 selbst über die Telefone 13, insbesondere über die Telefontastaturen, eingegebene Daten.

Die Funktionsweise des Systems ist beispielsweise wie folgt: Ein Benutzer 15 wählt mit seinem Mobiltelefon 13 am Schauplatz 11 die Telefonnummer 21, die auf der dem Studio einer bekannten Fernsehsendung nachempfundenen Plakatwand 23 angezeigt wird.

In der Aufnahmeeinheit 31 wird mit Hilfe der Auswerteeinheit 49 anhand gespeicherter Telefonnummern automatisch überprüft, ob der Anrufer 15 zugelassen wird. Dies ist z.B. nicht der Fall, wenn mit dem Telefon 13 am gleichen Tag bereits mehr als drei Anrufe oder innerhalb der letzten Woche mehr als zehn Anrufe getätigt wurden. Auch von außerhalb der den Schauplatz 11 abdeckenden Mobilfunkzelle anrufende Personen können durch Anwendung entsprechender Auswahlkriterien ausgeschlossen werden.

Die Kommunikation zwischen dem angerufenen Kamerasystem 27 und sowohl gesperrten als auch zugelassenen Benutzern 15 erfolgt durch den Sprachcomputer 25 der Aufnahmeeinheit 31. Wird die Aufnahmezentrale 17 eingesetzt, so kann auch eine als Aufnahmeleiter, Moderator oder Regisseur fungierende Person in der Aufnahmezentrale 17 mit dem Benutzer 15 sprechen.

So kann der Benutzer 15 beispielsweise darüber informiert werden, daß er Gelegenheit zu einer Darbietung, beispielsweise zum Singen eines Liedes, zur Beantwortung von Quizfragen; zum Vorstellen im Rahmen einer Single-Show oder zur Teilnahme an einer Umfrage haben und dabei von einer Kamera 39 aufgenommen werden wird. Im Fall von Bewerbungs-, Casting- oder Umfrage-Aktionen kann dem Benutzer 15 mitgeteilt werden, was von ihm im Rahmen der jeweiligen Aktion erwartet wird.

Wenn dem Benutzer 15 die Existenz und/oder der Ort der Kamera 39 nicht bekannt ist, kann der Benutzer 15 außerdem über sein Mobiltelefon 13 angewiesen werden, sich in eine bestimmte Richtung zu drehen, um von der Kamera 39 erfaßt zu werden. Außerdem kann der Benutzer 15 über sein Mobiltelefon 13 an eine bestimmte, beispielsweise markierte Stelle am Schauplatz 11 dirigiert werden.

Um gegebenenfalls vorhandenen gesetzlichen Bestimmungen oder anderen Vorschriften zu genügen, kann der Benutzer 15 vor Beginn einer Aufnahme außerdem über den jeweiligen rechtlichen Hintergrund informiert werden. Insbesondere kann der Benutzer 15 gebeten werden, sein Einverständnis damit zu erklären, daß er aufgenommen und ggfls. die Aufnahme öffentlich zugänglich gemacht und/oder gewerblich genutzt wird.

Während dieser Vorbereitungsphase kann der Benutzer 15 von der Aufnahmeeinheit 31 durch ein Menü geführt werden, in welchem er über Sprachsteuerung oder über die Tastatur seines Telefons 13 unter vorgeschlagenen Menüpunkten auswählen kann.

Außerdem kann der Benutzer 15 aufgefordert werden, über die Tastatur seines Telefons 13 bestimmte Daten wie z.B. sein Geschlecht, sein Alter, seinen Beruf etc. an die Aufnahmeeinheit 31 zu übermitteln, um eine Datenbank der Speichereinrichtung 37 zu füllen. Beliebige Informationen können auf diese Weise in Tastatureingaben übersetzt und in digitaler Form abgelegt werden.

Die Eingabe von Informationen oder Daten entweder durch Sprache oder über die Telefontastatur ist nicht auf die Aufnahmevorbereitung beschränkt, sondern kann auch während der eigentlichen Aufnahme erfolgen.

Bereits unmittelbar im Anschluß an den Aufbau der Kommunikationsverbindung 19 oder mit Beginn der eigentlichen Aufnahme wird von der Aufnahmeeinheit 31 automatisch die "on air"- oder "Auf Sendung"-Anzeige 24 aktiviert, wodurch am Schauplatz 11 befindlichen Personen eine bevorstehende oder eine laufende Aufnahme angezeigt wird.

Außerdem wird von der Aufnahmeeinheit 31 automatisch die Aufnahmetechnik 29, 39 aktiviert, um für eine optimale Beleuchtung zu sorgen und Umgebungston aufzunehmen. Es kann auch dem Benutzer 15 ermöglicht werden, über sein Telefon 13 die am Schauplatz 11 installierte Aufnahmetechnik 29, 30 sowie das Kamerasystem 37 zumindest innerhalb bestimmter Grenzen selbst zu betreiben.

Das Aufnahmesystem ist so konzipiert, daß der Benutzer 15 während der eigentlichen Aufnahme vor der Plakatwand 23 steht, die somit den Aufnahmehintergrund bildet. Einfach durch Anrufen der schauplatzspezifischen Telefonnummer 21 kann der Benutzer 15 in das durch die Gestaltung der Plakatwand 23 vorgegebene Szenario eintauchen, sich also gewissermaßen selbst in das Szenario "beamen".

Anfang und Ende der eigentlichen Aufnahme können dem Benutzer ebenfalls über sein Telefon 13 mitgeteilt werden.

Während der Aufnahme mit der Kamera 37 aufgenommene Videodaten, mit dem Tonaufnahmesystem 30 und dem Telefon 13 aufgenommene Audiodaten, über die Tastatur des Telefons 30 übermittelte Benutzerdaten sowie die Telefonnummern der für Anrufe verwendeten Telefone 13 werden in Datenbanken der Speichereinrichtung 37 abgelegt.

Diese Aufnahmedaten können unmittelbar im Anschluß an die Aufnahme über das Telefonnetz 35 an den Internet-Server 45 und/oder an die ggfls. vorhandene Aufnahmezentrale 17 übermittelt oder zu einem späteren Zeitpunkt abgerufen werden.

Die Aufnahmeeinheit 31 kann mit einer Vorschaufunktion ausgestattet sein, die es zumindest autorisierten Personen ermöglicht, von einem beliebigen Ort aus die gespeicherten Videodaten mit reduzierter Bildqualität vergleichsweise schnell zu sichten.

Das Zusammenführen, insbesondere Synchronisieren von Bild und Ton kann durch geeignete Verfahren in der Aufnahmeeinheit 31, am Internet-Server 45 oder in der ggfls. vorhandenen Aufnahmezentrale 17 erfolgen.

Während zu Unterhaltungszwecken aufgenommene Daten kostenlos oder kostenpflichtig beispielsweise im Internet öffentlich zugänglich gemacht oder im Fernsehen gesendet werden, können auf z.B. im Rahmen von Umfrage-, Bewerbungs- oder Casting-Aktionen gewonnene Daten nur autorisierte Personen, z.B. die jeweiligen Auftraggeber zugreifen.

Aus einer Vielzahl von für das Fernsehen gesammelten Aufnahmen z.B. in Form einzelner Programmstücke, die während einer beispielsweise einen oder mehrere Tage umfassenden Aufnahmeperiode an einem Schauplatz 11 oder an mehreren Schauplätzen 11, 11', 11", 11'", usw. aufgenommenen wurden, kann ein Programm zusammengestellt und zu einem späteren Zeitpunkt gesendet werden.

### Bezugszeichenliste

- 11, 11', 11", 11''': Schauplatz
- 13: Telefon, Mobiltelefon
- 15: Benutzer
- 17: Aufnahmezentrale
- 19: Kommunikationsverbindung
- 21: Telefonnummer
- 23: Anzeigeeinrichtung
- 24: Anzeigeeinheit
- 25: Kommunikationseinheit
- 27: Kamerasystem
- 29: Beleuchtungseinrichtung
- 30: Tonaufnahmesystem
- 31: Aufnahmeeinheit
- 35: Kommunikationsnetz, Datennetz
- 37: Speichereinrichtung
- 39: Kamera
- 43: Kommunikationsnetz
- 45: Internet-Server
- 47: Steuereinheit
- 49: Auswerteeinheit

## Patentansprüche

1. Aufnahmeverfahren, bei dem
- an wenigstens einem Schauplatz (11) zwischen einem am Schauplatz (11) befindlichen Telefon (13) und einem am Schauplatz (11) installierten Kamerasystem (27) zum Initiieren der Aufnahme von Videodaten mittels des Kamerasystems (27) eine Kommunikationsverbindung (19) aufgebaut wird, und
- anschließend mittels des Kamerasystems (27) Videodaten mit einem am Schauplatz (11) befindlichen Benutzer (15) des Kamerasystems (27) als Mitwirkenden aufgenommen werden,
- wobei außerhalb eines begrenzten, den jeweiligen Schauplatz (11), jedoch keinen weiteren Schauplatz (11'), (11"), (11"') enthaltenden Bereiches der Aufbau der Kommunikationsverbindung (19) verhindert wird.

2. Verfahren nach Anspruch 1,
**dadurch gekennzeichnet, dass**
eine schauplatzspezifische Kommunikationsverbindung (19) aufgebaut wird.

3. Verfahren nach Anspruch 1 oder 2,
**dadurch gekennzeichnet, dass**
die Kommunikationsverbindung (19) mit einem Mobiltelefon (13) eines Benutzers (15) aufgebaut wird.

4. Verfahren nach Anspruch 3,
**dadurch gekennzeichnet, dass**
der die Kommunikationsverbindung (19) mittels seines Mobiltelefons (13) aufbauende Benutzer (15) und der bei der Aufnahme der Videodaten mitwirkende Benutzer (15) identisch sind.

5. Verfahren nach einem der vorhergehenden Ansprüche,
**dadurch gekennzeichnet, dass**
zum Aufbau der Kommunikationsverbindung (19) das Kamerasystem (27) mittels des Telefons (13) über eine schauplatzspezifische Telefonnummer (21) angerufen wird.

6. Verfahren nach einem der vorhergehenden Ansprüche,
**dadurch gekennzeichnet, dass**
auf einer am Schauplatz (11) installierten Anzeigeeinrichtung (23), insbesondere einem Plakat, einem Poster oder einem Monitor, wenigstens eine, bevorzugt genau eine, schauplatzspezifische Telefonnummer (21) angezeigt wird.

7. Verfahren nach Anspruch 6,
**dadurch gekennzeichnet, dass**
die Anzeigeeinrichtung (23) während der Aufnahme als Hintergrund verwendet wird.

8. Verfahren nach einem der vorhergehenden Ansprüche,
**dadurch gekennzeichnet, dass**
eine laufende Aufnahme am Schauplatz (11), insbesondere auf einer Anzeigeeinrichtung (23), optisch und/oder akustisch angezeigt wird.

9. Verfahren nach einem der vorhergehenden Ansprüche,
**dadurch gekennzeichnet, dass**
Audiodaten über das Telefon (13) aufgenommen und insbesondere gespeichert werden.

10. Verfahren nach einem der vorhergehenden Ansprüche,
**dadurch gekennzeichnet, dass**
Audiodaten über ein am Schauplatz (11) installiertes Tonaufnahmesystem (30) aufgenommen und insbesondere gespeichert werden.

11. Verfahren nach einem der vorhergehenden Ansprüche,
**dadurch gekennzeichnet, dass**
das Kamerasystem (27) automatisch und insbesondere entsprechend einer zumindest im wesentlichen vorgebbaren, bevorzugt über das Telefon (13) beeinflußbaren Aufnahmeprozedur arbeitet.

12. Verfahren nach einem der vorhergehenden Ansprüche,
**dadurch gekennzeichnet, dass**
das Kamerasystem (27) über eine Aufnahmeeinheit (31) und/oder über das Telefon (13) aktiviert, deaktiviert und/oder gesteuert wird.

13. Verfahren nach einem der vorhergehenden Ansprüche,
**dadurch gekennzeichnet, dass**
die Kommunikationsverbindung (19) zwischen dem Telefon (13) und einer zur Kommunikation mit dem Kamerasystem (27) und insbesondere zur Steuerung des Kamerasystems (27) dienenden Aufnahmeeinheit (31) aufgebaut wird.

14. Verfahren nach einem der vorhergehenden Ansprüche,
**dadurch gekennzeichnet, dass**
im Anschluß an den Aufbau der Kommunikationsverbindung (19) am Schauplatz (11) installierte aufnahmetechnische Einrichtungen (29, 30), insbesondere zur Beleuchtung und/oder Tonaufnahme, aktiviert, deaktiviert und/oder gesteuert werden, insbesondere über eine Aufnahmeeinheit (31) und/oder über das Telefon (13).

15. Verfahren nach einem der vorhergehenden Ansprüche,
**dadurch gekennzeichnet, dass**
zur Kommunikation mit dem Benutzer (15) eine Kommunikationseinheit (25) insbesondere in Form eines Sprachcomputers eingesetzt wird.

16. Verfahren nach einem der vorhergehenden Ansprüche,
**dadurch gekennzeichnet, dass**
über das Telefon (13) Sprachmitteilungen, insbesondere Informationen, Belehrungen, Erklärungen und/oder Regieanweisungen, an den Benutzer (15) bevorzugt menügesteuert übermittelt werden.

17. Verfahren nach einem der vorhergehenden Ansprüche,
**dadurch gekennzeichnet, dass**
über das Telefon (13), insbesondere über eine Tastatur des Telefons (13), an eine Aufnahmeeinheit (31) insbesondere benutzerspezifische und/oder die jeweilige Aufnahme betreffende Benutzerdaten übermittelt und insbesondere gespeichert werden.

18. Verfahren nach einem der vorhergehenden Ansprüche,
**dadurch gekennzeichnet, dass**
mittels gespeicherter Benutzerdaten und/oder vorgebbarer Kriterien zwischen zumindest vorübergehend gesperrten Benutzern (15) einerseits und zuzulassenden, vorzugsweise vorgebbare Auswahlkriterien erfüllenden Benutzern (15) andererseits unterschieden wird.

19. Verfahren nach einem der vorhergehenden Ansprüche,
**dadurch gekennzeichnet, dass**
zumindest die Videodaten umfassende Aufnahmedaten vorzugsweise am Schauplatz (11) gespeichert werden.

20. Verfahren nach einem der vorhergehenden Ansprüche,
**dadurch gekennzeichnet, dass**
zumindest die Videodaten umfassende, insbesondere am Schauplatz (11) gespeicherte Aufnahmedaten über ein Kommunikationsnetz oder Datennetz (35), insbesondere über ein vorhandenes Telefonnetz, an einen vorzugsweise vom Schauplatz (11) räumlich getrennten Ort übermittelt werden, insbesondere an einen Internet-Server (45) oder an eine Aufnahmezentrale (17).

21. Verfahren nach einem der vorhergehenden Ansprüche,
**dadurch gekennzeichnet, dass**
zumindest die Videodaten umfassende Aufnahmedaten im Fernsehen gesendet und/oder im Internet bereitgestellt werden.

22. Verfahren nach einem der vorhergehenden Ansprüche,
**dadurch gekennzeichnet, dass**
mittels des Kamerasystems (27) eine Live-Aufnahme des Schauplatzes (11) zeitweise oder zumindest im wesentlichen ununterbrochen bereitgestellt wird, insbesondere im Internet, wobei mittels des Telefons (13) hinsichtlich Anfangs- und Endzeitpunkt definierbare Aufnahmeabschnitte abgespeichert werden.

23. Verfahren nach einem der vorhergehenden Ansprüche,
**dadurch gekennzeichnet, dass**
die Videodaten einer Nachbearbeitung unterzogen und insbesondere mit aufgenommenen Audiodaten zusammengefaßt, bevorzugt synchronisiert werden.

24. Verfahren nach einem der vorhergehenden Ansprüche,
**dadurch gekennzeichnet, dass**
Videodaten an einer Vielzahl von räumlich getrennten Schauplätzen (11, 11', 11", 11"') aufgenommen werden.

25. Verfahren nach einem der vorhergehenden Ansprüche,
**dadurch gekennzeichnet, dass**
als Schauplatz (11) ein öffentlich zugänglicher Ort gewählt wird, insbesondere ein Platz oder eine Straße, und/oder dass als Schauplatz (11) ein Gebäude, insbesondere eine Gaststätte, eine Diskothek, ein Kino oder eine Veranstaltungshalle, gewählt wird, vorzugsweise ein als Bühne ausgebildeter Gebäudeteil.

## Claims

1. A recording method in which
- a communication link (19) is set up at at least one venue or scene (11) between a telephone (13) located at the scene (11) and a camera system (27) installed at the scene (11) for the initiating of the recording of video data by means of a camera system (27); and
- subsequently, video data are recorded by means of the camera system (27) with a user (15) of the camera system (27) located at the scene (11) as a participant;
- with the set-up of the communication link (19) being prevented outside a limited range including the respective scene (11), but no further scene (11'), (11"), (11"').

2. A method in accordance with claim 1, **characterised in that** a communication link (19) specific to the scene is set up.

3. A method in accordance with claim 1 or claim 2, **characterised in that** the communication link (19) is set up with a mobile telephone (13) of a user (15).

4. A method in accordance with claim 3, **characterised in that** the user (15) setting up the communication link (19) by means of his mobile telephone (13) and the user (15) participating in the recording of the video data are identical.

5. A method in accordance with any one of the preceding claims, **characterised in that** the camera system (27) is called via a telephone number (21) specific to the scene by means of the telephone (13) for the setting up of the communication link (19).

6. A method in accordance with any one of the preceding claims, **characterised in that** at least one, preferably precisely one, telephone number (21) specific to the scene is displayed on a display unit (23), in particular a placard, a poster or a monitor, installed at the scene (11).

7. A method in accordance with claim 6, **characterised in that** the display device (23) is used as a background during the recording.

8. A method in accordance with any one of the preceding claims, **characterised in that** a running recording is displayed visually and/or acoustically at the scene (11,) in particular on a display device (23).

9. A method in accordance with any one of the preceding claims, **characterised in that** audio data are picked up, and in particular stored, via the telephone (13).

10. A method in accordance with any one of the preceding claims, **characterised in that** audio data are picked up, and in particular stored, via a sound recording system (30) installed at the scene (11).

11. A method in accordance with any one of the preceding claims, **characterised in that** the camera system (27) operates automatically and in particular in accordance with an at least substantially pre-settable recording procedure which can preferably be influenced via the telephone (13).

12. A method in accordance with any one of the preceding claims, **characterised in that** the camera system (27) is activated, deactivated and/or controlled via a recording unit (31) and/or via the telephone (13).

13. A method in accordance with any one of the preceding claims, **characterised in that** the communication link (19) is set up between the telephone (13) and a recording unit (1) serving for the communication with the camera system (27) and in particular for the control of the camera system (27).

14. A method in accordance with any one of the preceding claims, **characterised in that** technical recording equipment (29, 30), in particular for the lighting and/or sound recording, installed at the scene (11) is activated, deactivated and/or controlled subsequent to the setting up of the communication link (19), in particular via a recording unit (31) and/or via the telephone (13).

15. A method in accordance with any one of the preceding claims, **characterised in that** a communications unit (25), in particular in the form of a speech computer, is used for the communication with the user (15).

16. A method in accordance with any one of the preceding claims, **characterised in that** voice messages, in particular information, instructions, explanations and/or direction instructions, are preferably communicated to the user (15) by menu control via the telephone (13).

17. A method in accordance with any one of the preceding claims, **characterised in that** user data, in particular relating to the specific user and/or to the respective recording, are communicated to a recording unit (31), and in particular stored, via the telephone (13), in particular via a keypad of the telephone (13).

18. A method in accordance with any one of the preceding claims, **characterised in that** a distinction is made by means of stored user data and or pre-settable criteria between at least temporarily blocked users (15), on the one hand, and users (15) who are to be accepted and who preferably satisfy pre-settable selection criteria, on the other hand.

19. A method in accordance with any one of the preceding claims, **characterised in that** at least the recorded data including the video data are preferably stored at the scene (11).

20. A method in accordance with any one of the preceding claims, **characterised in that** recorded data at least including the video data, and in particular recording data stored at the scene (11), are transmitted via a communication network or a data network (35), in particular via an existing telephone network, to a place which is preferably spatially separated from the scene (11), in particular to an Internet server (45) or to a central recording facility (17).

21. A method in accordance with any one of the preceding claims, **characterised in that** recorded data at least including the video data are broadcast on television and/or made available on the Internet.

22. A method in accordance with any one of the preceding claims, **characterised in that** a live recording of the scene (11) is made available, in particular on the Internet, at times or at least substantially without interruption, by means of the camera system (27), with definable recording sections with respect to the time of starting and of ending being stored by means of the telephone (13).

23. A method in accordance with any one of the preceding claims, **characterised in that** the video data are subjected to later processing and are in particular combined with recorded audio data, preferably synchronised.

24. A method in accordance with any one of the preceding claims, **characterised in that** video data are recorded at a plurality of spatially separated scenes (11, 11', 11", 11"').

25. A method in accordance with any one of the preceding claims, **characterised in that** a publicly accessible place is selected as a scene (11), in particular a square or a street; and/or **in that** a building is selected as the scene (11), in particular a restaurant, a discotheque, a cinema or an event hall, preferably a building part designed as a stage.

## Revendications

1. Procédé d'enregistrement, dans lequel
- sur au moins une scène (11), une liaison de communication (19) est établie entre un téléphone (13) se trouvant sur la scène (11) et un système de caméra (27) installé sur la scène (11) afin de déclencher l'enregistrement de données vidéo au moyen du système de caméra (27), et
- au moyen du système de caméra (27), des données vidéo sont enregistrées avec comme coopérateur un utilisateur (15), se trouvant sur la scène (11), du système de caméra (27),
- l'établissement de la liaison de communication (19) étant empêché en dehors d'une zone délimitée contenant la scène respective (11) mais ne contenant pas d'autres scènes (11', 11", 11''').

2. Procédé selon la revendication 1, **caractérisé en ce qu'**on établit une liaison de communication (19) spécifique à la scène.

3. Procédé selon la revendication 1 ou 2, **caractérisé en ce qu'**on établit la liaison de communication (19) avec un téléphone mobile (13) d'un utilisateur (15).

4. Procédé selon la revendication 3, **caractérisé en ce que** l'utilisateur (15) établissant la liaison de communication (19) au moyen de son téléphone mobile (13) et l'utilisateur (15) coopérant lors de l'enregistrement des données vidéo sont identiques.

5. Procédé selon l'une des revendications précédentes, **caractérisé en ce que**, pour l'établissement de la liaison de communication (19), on appelle le système de caméra (27) au moyen du téléphone (13) par l'intermédiaire d'un numéro de téléphone (21) spécifique à la scène.

6. Procédé selon l'une des revendications précédentes, **caractérisé en ce qu'**on affiche sur un dispositif d'affichage (23) installé sur la scène (11), notamment sur une affiche, un poster ou un moniteur, au moins un, de préférence exactement un, numéro de téléphone (21) spécifique à la scène.

7. Procédé selon la revendication 6, **caractérisé en ce qu'**on utilise le dispositif d'affichage (23) comme arrière-plan pendant l'enregistrement.

8. Procédé selon l'une des revendications précédentes, **caractérisé en ce qu'**on indique un enregistrement en cours sur la scène (11), notamment sur un dispositif d'affichage (23), de façon optique et/ou de façon acoustique.

9. Procédé selon l'une des revendications précédentes, **caractérisé en ce qu'**on enregistre des données audio par l'intermédiaire du téléphone (13) et notamment on les mémorise.

10. Procédé selon l'une des revendications précédentes, **caractérisé en ce qu'**on enregistre des données audio par l'intermédiaire d'un système d'enregistrement audio (30) installé sur la scène (11) et notamment on les mémorise.

11. Procédé selon l'une des revendications précédentes, **caractérisé en ce que** le système de caméra (27) travaille automatiquement et notamment selon une procédure d'enregistrement pouvant être au moins globalement prescrite et influençable de préférence par l'intermédiaire du téléphone (13).

12. Procédé selon l'une des revendications précédentes, **caractérisé en ce qu'**on active, désactive et/ou commande le système de caméra (27) par l'intermédiaire d'une unité d'enregistrement (31) et/ou par l'intermédiaire du téléphone (13).

13. Procédé selon l'une des revendications précédentes, **caractérisé en ce qu'**on établit la liaison de communication (19) entre le téléphone (13) et une unité d'enregistrement (31) servant à la communication avec le système de caméra (27) et notamment à la commande du système de caméra (27).

14. Procédé selon l'une des revendications précédentes, **caractérisé en ce que**, à la suite de l'établissement de la liaison de communication (19), on active, désactive et/ou commande, notamment par l'intermédiaire d'une unité d'enregistrement (31) et/ou du téléphone (13), des dispositifs techniques d'enregistrement (29, 30) installés sur la scène (11) et destinés notamment à l'éclairage et/ou à l'enregistrement du son.

15. Procédé selon l'une des revendications précédentes, **caractérisé en ce qu'**on utilise pour la communication avec l'utilisateur (15) une unité de communication (25) ayant notamment la forme d'un ordinateur vocal.

16. Procédé selon l'une des revendications précédentes, **caractérisé en ce qu'**on transmet à l'utilisateur (15), par l'intermédiaire du téléphone (13), des annonces vocales, notamment des informations, des renseignements, des explications et/ou des instructions de régie, et ce, de préférence, avec une commande par menu.

17. Procédé selon l'une des revendications précédentes, **caractérisé en ce qu'**on transmet à une unité d'enregistrement (31) par l'intermédiaire du téléphone (13), notamment par l'intermédiaire d'un clavier du téléphone (13), en particulier des données d'utilisateur spécifiques à l'utilisateur et/ou concernant l'enregistrement respectif et notamment on les mémorise.

18. Procédé selon l'une des revendications précédentes, **caractérisé en ce que**, au moyen de données d'utilisateur mémorisées et/ou de critères pouvant être prescrits, on fait une distinction entre d'une part des utilisateurs (15) bloqués au moins provisoirement et d'autre part des utilisateurs (15) à admettre et satisfaisant à des critères de sélection pouvant être prescrits de préférence.

19. Procédé selon l'une des revendications précédentes, **caractérisé en ce qu'**on mémorise des données d'enregistrement comprenant au moins les données vidéo de préférence sur la scène (11).

20. Procédé selon l'une des revendications précédentes, **caractérisé par le fait qu'**on transmet des données d'enregistrement comprenant au moins les données vidéo et mémorisées notamment sur la scène (11) par l'intermédiaire d'un réseau de communication ou d'un réseau de données (35), notamment par l'intermédiaire d'un réseau téléphonique existant, à un lieu de préférence séparé spatialement de la scène (11), notamment à un serveur Internet (45) ou à un central d'enregistrement (17).

21. Procédé selon l'une des revendications précédentes, **caractérisé par le fait qu'**on émet des données d'enregistrement comprenant au moins les données vidéo à la télévision et/ou on les met à disposition sur Internet.

22. Procédé selon l'une des revendications précédentes, **caractérisé par le fait que**, au moyen du système de caméra (27), on met à disposition, notamment sur Internet, un enregistrement en direct de la scène (11) par moment ou de façon au moins globalement sans interruption, des sections d'enregistrement dont les instants de début et de fin peuvent être définis étant mémorisées au moyen du téléphone (13).

23. Procédé selon l'une des revendications précédentes, **caractérisé par le fait qu'**on soumet les données vidéo à un traitement ultérieur et notamment on les réunit à des données audio enregistrées, de préférence en les synchronisant.

24. Procédé selon l'une des revendications précédentes, **caractérisé par le fait qu'**on enregistre des données vidéo sur de nombreuses scènes (11, 11', 11'', 11''') spatialement séparées les unes des autres.

25. Procédé selon l'une des revendications précédentes, **caractérisé par le fait qu'**on choisit comme scène (11) un lieu accessible au public, notamment une place ou une rue, et/ou on choisit comme scène (11) un bâtiment, notamment un restaurant, une discothèque, un cinéma ou une salle de spectacle, de préférence une partie de bâtiment conçue comme une scène de théâtre.
